(19) Europäisches Patentamt
European Patent Office
Office européen des brevets

(11) **EP 4 571 802 A1**

(12) **EUROPÄISCHE PATENTANMELDUNG**

(43) Veröffentlichungstag:
**18.06.2025 Patentblatt 2025/25**

(21) Anmeldenummer: **23215621.6**

(22) Anmeldetag: **11.12.2023**

(51) Internationale Patentklassifikation (IPC):
*H01F 27/08* (2006.01)    *H01F 37/00* (2006.01)
*H01F 3/14* (2006.01)    *H01F 27/10* (2006.01)
*H01F 27/16* (2006.01)

(52) Gemeinsame Patentklassifikation (CPC):
**H01F 37/00; H01F 3/14; H01F 27/08; H01F 27/085;
H01F 27/10**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Wobben Properties GmbH
26607 Aurich (DE)**

(72) Erfinder:
• **DABOUL, Hussam
26624 Südbrookmerland (DE)**
• **BUSEMANN, Steffen
28309 Bremen (DE)**
• **MÜLLER, Michael
26624 Südbrookmerland (DE)**

(74) Vertreter: **Eisenführ Speiser
Patentanwälte Rechtsanwälte PartGmbB
Johannes-Brahms-Platz 1
20355 Hamburg (DE)**

(54) **DROSSELEINHEIT, WINDENERGIEANLAGE UND VERWENDUNG EINER DROSSELEINHEIT MIT EINER WINDENERGIEANLAGE**

(57)    Drosseleinheit (1), insbesondere eine 3-Phasen-Drosseleinheit (1), aufweisend mindestens einen Schenkel (11, 12, 13), der sich zwischen einem ersten Ende (E1) und einem zweiten Ende (E2) erstreckt, wobei der mindestens eine Schenkel von einer Spule (L1, L2, L3) umfasst ist, ein erstes Joch (21), welches mit dem ersten Ende (E1) des mindestens einen Schenkels (11, 12, 13) gekoppelt ist, eine erste elektromagnetische Isolierungseinheit (31), die zwischen dem ersten Ende (E1) des mindestens einen Schenkels (11, 12, 13) und dem ersten Joch (21) angeordnet ist, dadurch gekennzeichnet, dass die erste elektromagnetische Isolierungseinheit (31) einen Fluidkanal (40) aufweist oder diesen ausbildet, wobei der Fluidkanal (40) ausgebildet ist, zur Temperierung der Drosseleinheit (1) ein Temperierfluid (F) zu führen.

Fig. 2

**Beschreibung**

Die Erfindung betrifft eine Drosseleinheit. Ferner betrifft die Erfindung eine Windenergieanlage. Schließlich betrifft die Erfindung eine Verwendung einer Drosseleinheit mit einer Windenergieanlage.

Die Erfindung wird vorliegend insbesondere in Bezug zu Windenergieanlagen beschrieben. Die Erfindung ist jedoch nicht hierauf beschränkt.

Eine Drosseleinheit kann vereinfacht auch als Drossel bezeichnet werden. Eine Drosseleinheit ist beispielsweise eine elektromagnetische Drehstromdrosselspule. Solch Drosseleinheiten werden beispielsweise zur Begrenzung von Stromteilchen in elektrischen Leitungen, zur Zwischenspeicherung von Energie, zur Impedanzanpassung und/oder zur Filterung verwendet.

Beispielsweise können solche Drosseln netzseitig am Ausgang eines Wechselrichters dazu dienen, modulierten Strom möglichst sinusförmig zu formen, bevor er in ein elektrisches Versorgungsnetz eingespeist wird. Vorzugsweise ist die Drossel in diesem Beispiel zwischen dem Wechselrichter und dem elektrischen Versorgungsnetz angeordnet, in welches die Energie einzuspeisen ist. Eine entsprechende Drossel und deren Anordnung ist beispielsweise in DE 10 2016 122 435 A1 offenbart.

Ferner können solche Drosseln beispielsweise generatorseitig am Eingang eines Wechselrichters, zwischen einem Generator und diesem Wechselrichter angeordnet sein.

Insbesondere bei Windenergieanlagen, welche Wechselrichter aufweisen, werden die Drosseln zwischen dem Wechselrichter und dem Versorgungsnetz vorgesehen. Bei einer Windenergieanlage mit einem dreiphasigen System wird typischerweise für jede Phase eine Drossel verwendet oder es wird eine 3-Phasen-Drossel verwendet. Die drei Drosseln eines dreiphasigen Systems können zu einer dreiphasigen Drossel zusammengefasst werden. Hierfür kann ein aus gestapelten Blechen zusammengesetzter Magnetkern vorgesehen werden, der in etwa das Aussehen einer Acht eines digitalen Displays aufweist. Dadurch werden drei magnetisch miteinander verbundene Schenkel vorgesehen, welche jeweils eine Wicklung einer Phase aufnehmen. Ein Magnetfeld, das sich aus einem Strom einer Wicklung in dem magnetischen Schenkel dieser Wicklung ergibt, verläuft zu einem Teil jeweils durch die übrigen beiden magnetischen Schenkel der übrigen beiden Wicklungen. Dadurch überlagern sich die Magnetfelder aller drei Wicklungen und damit aller drei Phasen.

Solche Drosseln heizen sich im Betrieb auf und erreichen für den Einsatz kritische Temperaturen. Dies kann insbesondere den Wirkungsgrad und die Lebensdauer der Drossel minimieren.

Der Erfindung liegt deshalb die Aufgabe zugrunde, eine Drosseleinheit, eine Windenergieanlage sowie eine Verwendung der Drosseleinheit mit einer Windenergieanlage bereitzustellen, welche gegenüber der bekannten Lösung verbessert ist. Insbesondere liegt der Erfindung die Aufgabe zugrunde, eine Drosseleinheit, eine Windenergieanlage sowie eine Verwendung der Drosseleinheit mit einer Windenergieanlage bereitzustellen, welche in der Herstellung technisch weniger komplex und kostengünstiger ist und dennoch eine zuverlässige Temperierung der Drosseleinheit gewährleistet.

Gemäß einem ersten Aspekt der Erfindung wird die Aufgabe durch eine Drosseleinheit der eingangs beschriebenen Art gelöst, aufweisend mindestens einen Schenkel, der sich zwischen einem ersten Ende und einem zweiten Ende erstreckt, wobei der mindestens eine Schenkel von einer Spule umfasst ist, ein erstes Joch, welches mit dem ersten Ende des mindestens einen Schenkels gekoppelt ist, eine erste elektromagnetische Isolierungseinheit, die zwischen dem ersten Ende des mindestens einen Schenkels und dem ersten Joch angeordnet ist, dadurch gekennzeichnet, dass die erste elektromagnetische Isolierungseinheit einen Fluidkanal aufweist oder diesen ausbildet, wobei der Fluidkanal ausgebildet ist, zur Temperierung der Drosseleinheit ein Temperierfluid zu führen.

Die Erfindung beruht auf der Erkenntnis der Erfinder, dass die elektromagnetische Isolierungseinheit selbst den Fluidkanal aufweisen kann oder ausbilden kann, ohne dass hierzu Rohre oder Heatpipes oder sonstige separate fluidleitende Leitungen in der elektromagnetischen Isolierungseinheit zwischen dem Joch und dem Schenkel angeordnet werden müssen, welche den Fluidkanal ausbilden. Dies hat den Vorteil, dass die Teileanzahl die eine Drosseleinheit und somit eine Windenergieanlage umfasst, reduziert wird, was den Aufwand sowohl in der Herstellung, insbesondere der Arbeitsvorbereitung, und in der Produktionsplanung minimiert.

Ferner beruht die Erfindung auf der Erkenntnis der Erfinder, dass die Anforderungen an die elektromagnetische Isolierungseinheit dahingehend geringer werden, dass nun ein Kurzschluss nicht mehr über den vergleichsweise kurzen Abstand zwischen den Schenkeln und den Rohren oder Heatpipes verhindert werden muss. Insbesondere ist es somit hierdurch möglich, die Wärmeleitfähigkeit der elektromagnetischen Isolierungseinheit vornehmlicher in den Fokus zu setzen und somit eine verbesserte Temperierung der Drosseleinheit zu ermöglichen.

Die Drosseleinheit ist insbesondere für die Verwendung mit Windenergieanlagen vorgesehen.

Die Drosseleinheit ist vorzugsweise als drei-, vier- oder fünfschenklige Drosseleinheit, ausgebildet. Eine dreischenklige Drosseleinheit weist drei Schenkel auf, eine vierschenklige Drosseleinheit weist vier Schenkel auf und eine fünfschenklige Drosseleinheit weist fünf Schenkel auf.

Es ist wie gesagt vorgesehen, dass mindestens einer der Schenkel eine Spule aufweist, wobei diese Spule vorzugsweise eine Primärwicklung ist. Vorzugsweise weist die Drosseleinheit mehrere Schenkel auf, die jeweils von einer Spule umfasst sind, die als Primärwicklung ausgebildet sind. Insbesondere kann es bevorzugt sein, dass die Drosseleinheit fünf Schenkel aufweist, wobei drei Schenkel jeweils eine als Primärwicklung ausgebildete Spule aufweisen und zwei Schenkel als Rückflussschenkel ausgebildet sind. Die Rückflussschenkel bilden vorzugsweise die äußeren Schenkel der Drosseleinheit.

Durch die Anordnung der drei als Primärwicklungen ausgebildeten Spule erhält man ein 3-Phasensystem.

Die hierin beschriebene Drosseleinheit ist vorzugsweise eine 3-Phasen-Drosseleinheit.

Gemäß einer bevorzugten Ausführungsform weist die Drosseleinheit ein zweites Joch auf, welches mit dem zweiten Ende des mindestens einen Schenkels gekoppelt ist.

Ferner ist gemäß einer bevorzugten Fortbildung vorgesehen, dass die Drosseleinheit eine zweite elektromagnetische Isolierungseinheit aufweist, die zwischen dem zweiten Ende des mindestens einen Schenkels und dem zweiten Joch angeordnet ist.

Weiterhin ist gemäß einer bevorzugten Fortbildung der Drosseleinheit vorgesehen, dass die erste elektromagnetische Isolierungseinheit und/oder die zweite elektromagnetische Isolierungseinheit bei 20°C einen Wärmeleitkoeffizienten von mindestens von

$$0.001 \, \frac{W}{m*K},$$

, vorzugsweise von mindestens

$$0.1 \, \frac{W}{m*K}$$

, aufweist, und/oder bei 20°C einen Wärmeleitkoeffizienten von maximal $50 \, \frac{W}{m*K}$, vorzugsweise maximal $3 \, \frac{W}{m*K}$, aufweist.

Nach einer ferner bevorzugten Ausführungsform der Drosseleinheit ist vorgesehen, dass die erste elektromagnetische Isolierungseinheit und/oder die zweite elektromagnetische Isolierungseinheit aus einem glasfaserverstärkten Kunststoff und/oder einem Silikon besteht oder glasfaserverstärkten Kunststoff und/oder Silikon umfasst. Diese Werkstoffe haben eine besonders geeignete Wärmeleitfähigkeit für die Anwendung in Drosseleinheiten. Ferner ist ein Vorteil dieser Materialien, dass dies häufig verwendete und damit vergleichsweise gut verfügbare Werkstoffe sind.

Gemäß einer weiteren bevorzugten Ausführungsform der Drosseleinheit ist vorgesehen, dass die erste elektromagnetische Isolierungseinheit und/oder die zweite elektromagnetische Isolierungseinheit wärmeleitfähige Additive aufweisen, wobei die wärmeleitfähigen Additive vorzugsweise Additive aus Silikon und/oder Keramik umfassen. Diese Additive erhöhen die Wärmeleitfähigkeit in bevorzugter Weise.

Ferner ist nach einer bevorzugten Fortbildung der Drosseleinheit vorgesehen, dass die erste elektromagnetische Isolierungseinheit den Fluidkanal als Fluidleitung oder als Fluidrohr ausbildet und/oder die zweite elektromagnetische Isolierungseinheit den Fluidkanal als Fluidleitung oder als Fluidrohr ausbildet.

Weiter ist nach einer bevorzugten Fortbildung der Drosseleinheit vorgesehen, dass die erste elektromagnetische Isolierungseinheit und/oder die zweite elektromagnetische Isolierungseinheit eine Fluidkanalwand des Fluidkanals ausbilden, die den Fluidkanal zumindest teilweise räumlich begrenzt, wobei in dem Fluidkanal, insbesondere an der Fluidkanalwand, Wirbelgeneratoren und/oder statische Mischer angeordnet sind, welche die Oberfläche zur Wärmeableitung der Wärme zu dem Temperierfluid im Betrieb vergrößern und/oder eine turbulente Strömung des Temperierfluids in dem Fluidkanal bedingen, und/oder an der Fluidkanalwand eine profilierte Oberfläche, insbesondere eine rillenförmige Oberfläche, ausgebildet ist, welche die Oberfläche zur Wärmeableitung der Wärme zu dem Temperierfluid im Betrieb vergrößert und/oder eine turbulente Strömung des Temperierfluids in dem Fluidkanal bedingt.

Wirbelgeneratoren haben hierbei den Effekt, die Turbulenz in der Strömung nahe des Wandbereiches des Fluidkanals und damit den Wärmeübergangskoeffizienten zu erhöhen. Die statischen Mischer bewirken eine Mischung der Strömung, so dass "kälteres" Temperierfluid vom Inneren des Fluidkanals nach außen an die Wand des Fluidkanals strömt und "wärmeres" Temperierfluid, welches bereits an der Wand des Fluidkanals entlanggeströmt ist, von der Wand des Fluidkanals nach innen weggeführt wird. Hierdurch wird die Wärmeübertragung verbessert. Schließlich vergrößert eine profilierte Oberfläche die Oberfläche der Wand des Fluidkanals, so dass sich die übertragbare Wärme in bevorzugter Weise erhöhen kann.

Gemäß einer weiteren bevorzugten Ausführungsform der Drosseleinheit ist vorgesehen, dass in dem Fluidkanal im Betrieb der Drosseleinheit das Temperierfluid zur Temperierung geführt wird.

Darüber hinaus ist gemäß einer bevorzugten Fortbildung der Drosseleinheit vorgesehen, dass das Temperierfluid (F) aus Wasser und/oder Glykol und/oder Öl und/oder einem Gas und/oder einem Gasgemisch, insbesondere Luft, und/oder Flutec PP9 besteht und/oder das Temperierfluid Wasser und/oder Glykol und/oder Öl und/oder Gas und/oder ein Gasgemisch, insbesondere Luft, und/oder Flutec PP9 umfasst. Hierbei hat ein auf Wasser und/oder Öl basierendes Temperierfluid einen im Vergleich zu gasförmigen Temperierfluiden erhöhten Wärmeübergangskoeffizient. Die Verwendung eines flüssigen Temperierfluids ist jedoch im Vergleich zu einem gasförmigen Temperierfluid bei Leckagen nachteilig.

Ferner ist nach einer bevorzugten Ausführungsform der Drosseleinheit vorgesehen, dass der Fluidkanal einen kreisförmigen und/oder einen polygonalen, insbesondere einen viereckigen, quadratischen, rechteckigen oder trapezförmigen, Querschnitt aufweist.

Gemäß einer weiteren bevorzugten Fortbildung der Drosseleinheit ist vorgesehen, dass der Fluidkanal für einen Volumenstrom von mindestens 0,5 l/min und/oder maximal 5 l/min ausgelegt ist.

Gemäß einem zweiten Aspekt der Erfindung wird die Aufgabe durch eine Windenergieanlage der eingangs beschrieben Art gelöst, aufweisend eine Drosseleinheit gemäß dem ersten Aspekt oder bevorzugten Ausführungsformen dieser Drosseleinheit. Vorzugsweise weist die Windenergieanlage zwei, drei oder mehr Drosseleinheiten auf.

In einer bevorzugten Fortbildung ist vorgesehen, dass die Windenergieanlage einen Wechselrichter aufweist, wobei die Drosseleinheit zwischen dem Wechselrichter und einem Netzausgangsanschluss der Windenergieanlage gekoppelt ist, wobei der Netzausgangsanschluss der Windenergieanlage an ein Versorgungsnetz koppelbar ist. Vorzugsweise weist die Windenergieanlage mindestens zwei Wechselrichter auf.

Gemäß einem dritten Aspekt der Erfindung wird die Aufgabe durch eine Verwendung einer Drosseleinheit gemäß dem ersten Aspekt oder bevorzugten Ausführungsformen dieser Drosseleinheit mit einer Windenergieanlage gelöst.

Zu den Vorteilen, Ausführungsvarianten und Ausführungsdetails des zweiten und dritten Aspekts der Erfindung und ihrer Fortbildungen wird auf die vorangegangene Beschreibung zu den entsprechenden Merkmalen der Drosseleinheit verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Der Einfachheit halber sind nachfolgend für identische oder ähnliche Teile oder Teile mit identischer oder ähnlicher Funktion gleiche Bezugszeichen verwendet.

Bevorzugte Ausführungsformen der Erfindung werden beispielhaft anhand der beiliegenden Figuren erläutert. Es zeigen:

Fig. 1: eine schematische dreidimensionale Ansicht einer beispielhaften Ausführungsform einer Windenergieanlage;

Fig. 2: eine schematische erste Seitenansicht einer beispielhaften Ausführungsform einer Drosseleinheit; und

Fig. 3: eine schematische zweite Seitenansicht der in Figur 2 gezeigten Drosseleinheit;

Fig. 4 ein schematisches Schaltbild einer Netzschaltung der in Figur 1 dargestellten Windenergieanlage mit einer in den Figuren 2 und 3 dargestellten Drosseleinheit.

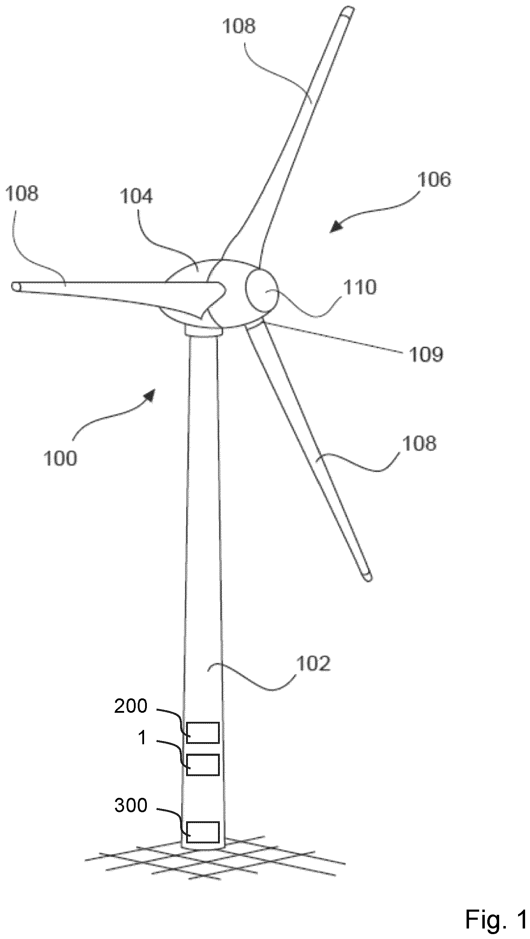

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

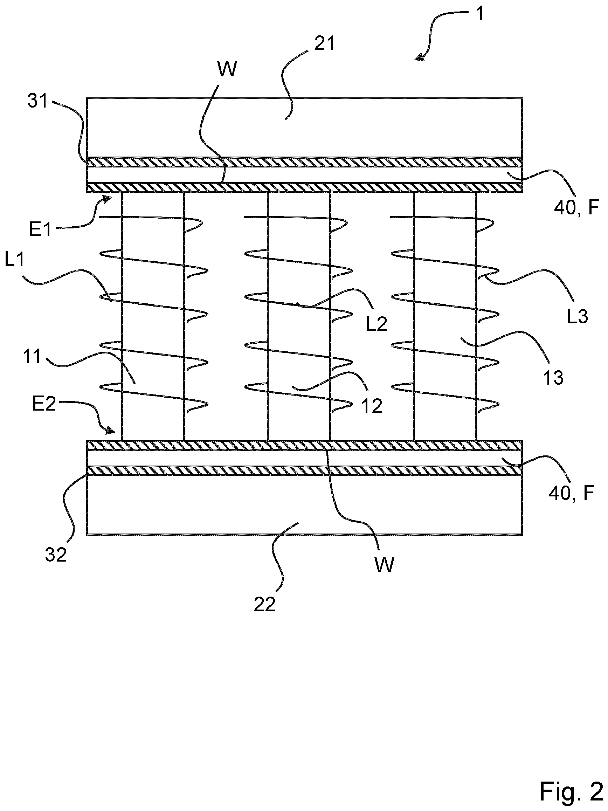

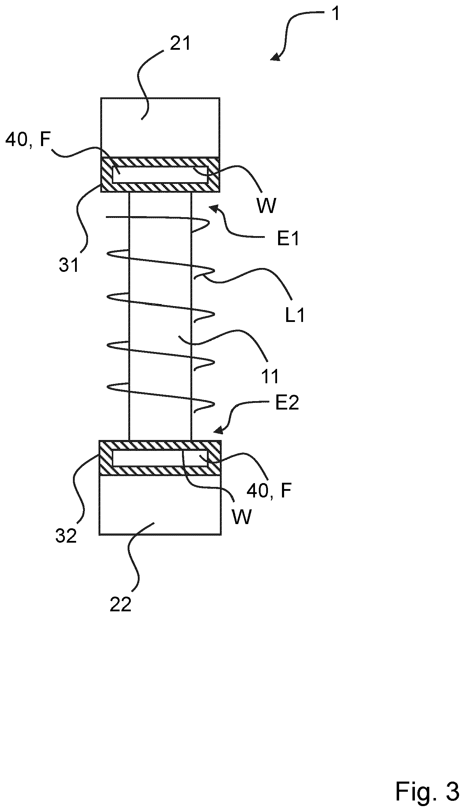

Die in Figur 1 schematisch dargestellte beispielhafte Ausführungsform einer Windenergieanlage 100 umfasst einen Wechselrichter 200 und eine Drosseleinheit 1, wie diese in einer beispielhaften Ausführungsform in einer ersten und zweiten Seitenansicht in den Figuren 2 und 3 schematisch dargestellt ist und im Folgenden beschrieben wird. Die Drosseleinheit 1 ist zwischen dem Wechselrichter 200 und einem Netzausgangsanschluss 300 der Windenergieanlage angeordnet, wobei der Netzausgangsanschluss 300 mit einem Versorgungsnetz gekoppelt ist.

Die in den Figuren 2 und 3 schematisch dargestellte Drosseleinheit 1 weist drei Schenkel 11, 12, 13 auf, die sich jeweils zwischen einem ersten Ende E1 und einem zweiten Ende E2 erstrecken, wobei die drei Schenkel 11, 12, 13 jeweils von einer Spule L1, L2, L3 umfasst sind. Die drei Schenkel 11, 12, 13 sind jeweils an dem ersten Ende E1 mit einem ersten Joch 21 gekoppelt und jeweils an dem zweiten Ende E2 mit einem zweiten Joch 22 gekoppelt. Hierbei ist vorgesehen, dass zwischen dem ersten Ende E1 der drei Schenkel 11, 12, 13 und dem ersten Joch 21 eine erste elektromagnetische Isolierungseinheit 31 angeordnet ist und zwischen dem zweiten Ende E2 der drei Schenkel 11, 12, 13 und dem zweiten Joch 22 eine zweite elektromagnetische Isolierungseinheit 32 angeordnet ist. Durch die erste und zweite elektromagnetische Isolierungseinheit 31, 32 sind die drei Schenkel 11, 12, 13 von dem ersten und zweiten Joch 21, 22 magnetisch entkoppelt.

Sowohl die erste als auch die zweite elektromagnetische Isolierungseinheit 31, 32 weisen einen Fluidkanal 40 auf bzw. bilden diesen aus. Der Fluidkanal 40 führt zur Temperierung der Drosseleinheit 1 ein Temperierfluid F. Die Fluidkanäle 40 weisen jeweils einen rechteckförmigen Querschnitt auf. Dies geht aus den Figuren 2 und 3 hervor, in denen die erste und zweite elektromagnetische Isolierungseinheit 31, 32 im Schnitt dargestellt sind. Prinzipiell können die Fluidkanäle 40 aber auch einen davon abweichenden polygonalen Querschnitt oder aber einen kreisförmigen Querschnitt aufweisen. Unabhängig von dem Querschnitt der Fluidkanäle lassen sich mittels dem Temperierfluid F jedenfalls die Temperatur der Drosseleinheit 1 einstellen oder auf eine bestimmte Temperatur oder einen bestimmten Temperaturbereich regeln. Diese Temperatur oder dieser Temperaturbereich werden so gewählt, dass die Drosseleinheit 1 eine möglichst lange Lebensdauer erreicht. Vorzugsweise sind die Fluidkanäle hinsichtlich ihres Querschnitts für einen Volumenstrom von mindestens 0,5 l/min und maximal 5 l/min ausgelegt.

Die erste elektromagnetische Isolierungseinheit 31 und die zweite elektromagnetische Isolierungseinheit 32 bilden hierbei eine Fluidkanalwand W des Fluidkanals 40 aus, die den Fluidkanal 40 räumlich, orthogonal zur Fließrichtung des Temperierfluids F begrenzt. Um die Temperierung der Drosseleinheit 1 zu verbessern, ist es vorgesehen, dass der Fluidkanal 40 der ersten elektromagnetischen Isolierungseinheit 31 an der Fluidkanalwand W Wirbelgeneratoren (nicht dargestellt) und statische Mischer aufweist (nicht dargestellt). Diese vergrößern einerseits die Oberfläche zur Wärmeableitung der Wärme zu dem Temperierfluid F und bedingen andererseits eine turbulente Strömung des Temperierfluids F innerhalb des Fluidkanals, was die Wärmeabfuhr aus der Drosseleinheit verbessert. Ferner ist zur Verbesserung der Temperierung der Drosseleinheit 1 vorgesehen, dass die Fluidkanalwand W des Fluidkanals 40 der zweiten elektromagnetischen Isolierungseinheit 32 eine rillenförmige Oberfläche aufweist (nicht dargestellt), welche die Oberfläche zur Wärmeableitung der Wärme zu dem Temperierfluid F im Betrieb vergrößert und ebenfalls eine turbulente Strömung des Temperierfluids F in dem Fluidkanal 40 bedingen kann.

Insofern sind die Fluidkanäle der ersten elektromagnetischen Isolierungseinheit 31 und der zweiten elektromagnetischen Isolierungseinheit 32 derart ausgebildet, dass im Betrieb das Temperierfluid F durch den jeweiligen Fluidkanal 40 strömt, um die gewünschte Temperatur in der Drosseleinheit 1 einzustellen. Als Temperierfluid F kommen beispielsweise ein Temperierfluid F bestehend aus oder umfassend Wasser und/oder Glykol und/oder Öl und/oder einem Gas und/oder einem Gasgemisch, insbesondere Luft, und/oder Flutec PP9 in Betracht.

In dieser bevorzugten Ausführungsform der Drosseleinheit 1 ist vorgesehen, dass die erste elektromagnetische Isolierungseinheit 31 und die zweite elektromagnetische Isolierungseinheit 32 bei 20°C einen Wärmeleitkoeffizienten von mindestens von $0.001 \frac{W}{m*K}$ und maximal $50 \frac{W}{m*K}$ aufweisen. Es kann aber auch bevorzugt sein, dass die elektromagnetische Isolierungseinheit 31 und die zweite elektromagnetische Isolierungseinheit 32 bei 20°C einen Wärmeleitkoeffizienten vorzugsweise von mindestens $0.1 \frac{W}{m*K}$ und von maximal $3 \frac{W}{m*K}$ aufweisen.

Die erste elektromagnetische Isolierungseinheit 31 und die zweite elektromagnetische Isolierungseinheit 32 bestehen aus einem Werkstoff, welches isolierende Eigenschaften aufweist. Insbesondere können die erste elektromagnetische Isolierungseinheit 31 und die zweite elektromagnetische Isolierungseinheit 32 wärmeleitfähige Additive aufweisen, wobei die wärmeleitfähigen Additive vorzugsweise Additive aus Silikon und/oder Keramik umfassen.

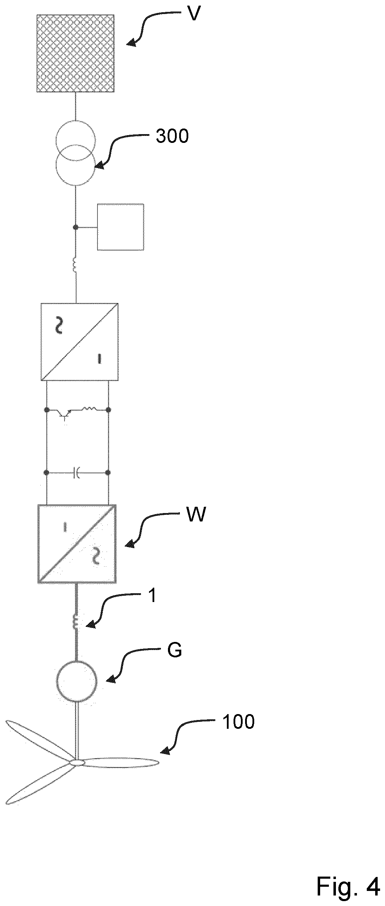

Figur 4 zeigt ein schematisches Schaltbild einer Netzschaltung einer Windenergieanlage 100 gemäß einer bevorzugten Ausführungsform mit einer in den Figuren 2 und 3 dargestellten Drosseleinheit 1. In diesem bevorzugten Ausführungsbeispiel ist die Drosseleinheit 1 zwischen einem Generator G der Windenergieanlage 100 und einem Wechselrichter W angeordnet. Über einen Netzausgangsanschluss 300 der Windenergieanlage 100 ist sie mit einem Versorgungsnetz V gekoppelt ist.

BEZUGSZEICHENLISTE

| | |
|---|---|
| 1 | Drosseleinheit |
| 11, 12, 13 | mindestens ein Schenkel |
| 21 | erstes Joch |
| 22 | zweites Joch |
| 31 | erste elektromagnetische Isolierungseinheit |
| 32 | zweite elektromagnetische Isolierungseinheit |
| 40 | Fluidkanal |
| 100 | Windenergieanlage |
| 102 | Turm |
| 104 | Gondel |
| 106 | aerodynamischer Rotor |
| 108 | Rotorblätter |
| 109 | Rotorblattwurzeln |
| 110 | Spinner |

| 200 | Wechselrichter |
| 300 | Netzausgangsanschluss |
| E1 | erstes Ende des mindestens einen Schenkels |
| E2 | zweites Ende des mindestens einen Schenkels |
| G | Generator |
| L1, L2, L3 | Spule |
| V | Versorgungsnetz |
| W | Fluidkanalwand |

**Patentansprüche**

1. Drosseleinheit (1), insbesondere eine 3-Phasen-Drosseleinheit (1), aufweisend

   - mindestens einen Schenkel (11, 12, 13), der sich zwischen einem ersten Ende (E1) und einem zweiten Ende (E2) erstreckt, wobei der mindestens eine Schenkel von einer Spule (L1, L2, L3) umfasst ist,
   - ein erstes Joch (21), welches mit dem ersten Ende (E1) des mindestens einen Schenkels (11, 12, 13) gekoppelt ist,
   - eine erste elektromagnetische Isolierungseinheit (31), die zwischen dem ersten Ende (E1) des mindestens einen Schenkels (11, 12, 13) und dem ersten Joch (21) angeordnet ist, **dadurch gekennzeichnet, dass**
   - die erste elektromagnetische Isolierungseinheit (31) einen Fluidkanal (40) aufweist oder diesen ausbildet, wobei der Fluidkanal (40) ausgebildet ist, zur Temperierung der Drosseleinheit (1) ein Temperierfluid (F) zu führen.

2. Drosseleinheit (1) nach dem vorhergehenden Anspruch 1, aufweisend ein zweites Joch (22), welches mit dem zweiten Ende (E2) des mindestens einen Schenkels (11, 12, 13) gekoppelt ist.

3. Drosseleinheit (1) nach dem vorhergehenden Anspruch 2, aufweisend eine zweite elektromagnetische Isolierungseinheit (32), die zwischen dem zweiten Ende (E2) des mindestens einen Schenkels (11, 12, 13) und dem zweiten Joch (22) angeordnet ist.

4. Drosseleinheit (1) nach einem der vorhergehenden Ansprüche 1-3, wobei die erste elektromagnetische Isolierungseinheit (31) und/oder die zweite elektromagnetische Isolierungseinheit (32) bei 20°C einen Wärmeleitkoeffizienten von mindestens von $0.001 \frac{W}{m*K}$ , vorzugsweise von mindestens $0.1 \frac{W}{m*K}$ , aufweist, und/oder bei 20°C einen Wärmeleitkoeffizienten von maximal $50 \frac{W}{m*K}$ , vorzugsweise maximal $3 \frac{W}{m*K}$ , aufweist.

5. Drosseleinheit (1) nach einem der vorhergehenden Ansprüche 1-4, wobei die erste elektromagnetische Isolierungseinheit (31) und/oder die zweite elektromagnetische Isolierungseinheit (32)

   - aus einem glasfaserverstärkten Kunststoff und/oder einem Silikon besteht oder
   - glasfaserverstärkten Kunststoff und/oder Silikon umfasst.

6. Drosseleinheit (1) nach einem der vorhergehenden Ansprüche 1-5, wobei die erste elektromagnetische Isolierungseinheit (31) und/oder die zweite elektromagnetische Isolierungseinheit (32) wärmeleitfähige Additive aufweisen, wobei die wärmeleitfähigen Additive vorzugsweise Additive aus Silikon und/oder Keramik umfassen.

7. Drosseleinheit (1) nach einem der vorhergehenden Ansprüche 1-6, wobei die erste elektromagnetische Isolierungseinheit (31) den Fluidkanal (40) als Fluidleitung oder als Fluidrohr ausbildet und/oder die zweite elektromagnetische Isolierungseinheit (32) den Fluidkanal (40) als Fluidleitung oder als Fluidrohr ausbildet.

8. Drosseleinheit (1) nach einem der vorhergehenden Ansprüche 1-7,

   - wobei die erste elektromagnetische Isolierungseinheit (31) und/oder die zweite elektromagnetische Isolierungseinheit (32) eine Fluidkanalwand (W) des Fluidkanals (40) ausbilden, die den Fluidkanal (40) zumindest teilweise räumlich begrenzt, wobei
   - in dem Fluidkanal (40), insbesondere an der Fluidkanalwand (W), Wirbelgeneratoren und/oder statische Mischer angeordnet sind, welche die Oberfläche zur Wärmeableitung der Wärme zu dem Temperierfluid im Betrieb vergrößern und/oder eine turbulente Strömung des Temperierfluids in dem Fluidkanal bedingen, und/oder
   - an der Fluidkanalwand (W) eine profilierte Oberfläche, insbesondere eine rillenförmige Oberfläche, ausgebildet ist, welche die Oberfläche zur Wärmeableitung der Wärme zu dem Temperierfluid (F) im Betrieb vergrößert und/oder eine turbulente Strömung des Temperierfluids (F) in dem Fluidkanal (40) bedingt.

9. Drosseleinheit (1) nach einem der vorhergehenden Ansprüche 1-8, wobei in dem Fluidkanal (40) im Betrieb der Drosseleinheit (1) das Temperierfluid (F) zur Temperierung geführt wird.

**10.** Drosseleinheit (1) nach einem der vorhergehenden Ansprüche 1-9, wobei das Temperierfluid (F) aus Wasser und/oder Glykol und/oder Öl und/oder einem Gas und/oder einem Gasgemisch, insbesondere Luft, und/oder Flutec PP9 besteht und/oder das Temperierfluid Wasser und/oder Glykol und/oder Öl und/oder Gas und/oder ein Gasgemisch, insbesondere Luft, und/oder Flutec PP9 umfasst.

**11.** Drosseleinheit (1) nach einem der vorhergehenden Ansprüche 1-10, wobei der Fluidkanal (40) einen kreisförmigen und/oder einen polygonalen, insbesondere einen viereckigen, quadratischen, rechteckigen oder trapezförmigen, Querschnitt aufweist.

**12.** Drosseleinheit (1) nach einem der vorhergehenden Ansprüche 1-11, wobei der Fluidkanal (40) für einen Volumenstrom von mindestens 0,5 l/min und/oder maximal 5 l/min ausgelegt ist.

**13.** Windenergieanlage (100) aufweisend eine Drosseleinheit (1) nach einem der vorhergehenden Ansprüche 1-12.

**14.** Windenergieanlage (100) nach dem vorhergehenden Anspruch 13, aufweisend einen Wechselrichter (200), wobei die Drosseleinheit (1) zwischen dem Wechselrichter (200) und einem Netzausgangsanschluss (300) der Windenergieanlage (100) gekoppelt ist, wobei der Netzausgangsanschluss (300) der Windenergieanlage (100) an ein elektrisches Versorgungsnetz koppelbar ist.

**15.** Verwendung einer Drosseleinheit (1) nach einem der vorhergehenden Ansprüche 1-12 mit einer Windenergieanlage (100).

Fig. 1

Fig. 2

Fig. 3

Fig. 4

Europäisches Patentamt
European Patent Office
Office européen des brevets

# EUROPÄISCHER RECHERCHENBERICHT

Nummer der Anmeldung

EP 23 21 5621

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/308951 A1 (SALOMAEKI JARKKO [FI]) 9. Dezember 2010 (2010-12-09) | 1-12 | INV. H01F27/08 |
| Y | * Absätze [0042] - [0044]; Abbildung 1 * | 13-15 | H01F37/00 H01F3/14 |
| | * Absätze [0060], [0061]; Abbildungen 16,17 * | | |
| | * Absatz [0075]; Abbildung 23 * | | ADD. H01F27/10 |
| | ----- | | H01F27/16 |
| Y,D | DE 10 2016 122435 A1 (WOBBEN PROPERTIES GMBH [DE]) 24. Mai 2018 (2018-05-24) | 13-15 | |
| A | * Zusammenfassung *; Abbildungen 1-5 * | 1-12 | |
| | * Absätze [0014] - [0034] * | | |
| | ----- | | |

RECHERCHIERTE SACHGEBIETE (IPC)

H01F

Der vorliegende Recherchenbericht wurde für alle Patentansprüche erstellt

| Recherchenort | Abschlußdatum der Recherche | Prüfer |
|---|---|---|
| München | 30. April 2024 | Reder, Michael |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 5621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-04-2024

| Im Recherchenbericht angeführtes Patentdokument | Datum der Veröffentlichung | Mitglied(er) der Patentfamilie | | Datum der Veröffentlichung |
|---|---|---|---|---|
| US 2010308951 A1 | 09-12-2010 | CN | 101884075 A | 10-11-2010 |
| | | EP | 2274751 A1 | 19-01-2011 |
| | | US | 2010308951 A1 | 09-12-2010 |
| | | WO | 2009053534 A1 | 30-04-2009 |
| DE 102016122435 A1 | 24-05-2018 | DE | 102016122435 A1 | 24-05-2018 |
| | | WO | 2018095852 A1 | 31-05-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016122435 A1